# EUROPÄISCHE PATENTSCHRIFT

(11) **EP 2 306 876 B1**
(45) Veröffentlichungstag und Bekanntmachung des Hinweises auf die Patenterteilung: **21.03.2012**
(21) Anmeldenummer: 09780594.9
(22) Anmeldetag: 15.07.2009
(51) Int. Cl.: A47J 45/07

(54) **GRIFFBEFESTIGUNG**
HANDLE FIXTURE
FIXATION DE POIGNÉE

(30) Priorität: 06.08.2008 DE 102008036551
(43) Veröffentlichungstag der Anmeldung: 13.04.2011
(73) Patentinhaber: WMF WÜRTTEMBERGISCHE METALLWARENFABRIK AG, 73309 Geislingen/Steige (DE)
(72) Erfinder: FEHSE, Hans-Friedrich, 73326 Deggingen (DE); GRABBE, Stephan, 73072 Donzdorf-Winzingen (DE); GEIGER, Martin, 73329 Kuchen (DE); JEHLE, Ragnar, 71636 Ludwigsburg (DE); KNEER, Peter, 73329 Kuchen (DE); MORMONE, Maria, 73329 Kuchen (DE); RAMMINGER, Peter, 73312 Aufhausen (DE); REINHARD, Dieter, 73326 Deggingen (DE); SCHMIDT, Heinz, 73312 Geislingen/Steige (DE); TATZELT, Peter, 73340 Amstetten (DE); UGLORZ, Friedhelm, 89555 Steinheim (DE)
(74) Vertreter: BRP Renaud & Partner
(86) Internationale Anmeldenummer: PCT/EP2009/059020
(87) Internationale Veröffentlichungsnummer: WO 2010/015492

(56) Entgegenhaltungen:
- DE-A1- 2 357 431
- DE-A1- 2 528 149
- DE-A1-102006 058 041

## Beschreibung

Die vorliegende Erfindung betrifft eine Griffbefestigungseinrichtung zum Befestigen eines Griffs an einem Kochgefäß oder dergleichen, gemäß dem Oberbegriff des Anspruchs 1. Die Erfindung betrifft außerdem ein, mit einer derartigen Befestigungseinrichtung ausgestattetes Kochgefäß.

Aus der DE 94 14 233 U1, ist eine gattungsgemäße Griffbefestigung zur Verrastung eines Griffstückes in seinen Gebrauchslagern an einem Kochgefäß oder dergleichen bekannt. Die beschriebene Griffbefestigungseinrichtung soll insbesondere derart ausgebildet sein, dass ein unbeabsichtigtes Entrasten des Griffstücks und damit verbunden eine unbeabsichtigte Trennung des Griffstücks vom Kochgefäß vermieden werden kann. Um dies zu bewirken, weist die bekannte Griffbefestigung zwei unabhängig voneinander arbeitende Rastverbindungen zwischen dem Kochgefäß einerseits und dem Griff andererseits auf.

Aus der DE 94 05 597 U1 ist eine weitere Vorrichtung zur Befestigung eines Griffs an einem Kochgefäß bekannt. Die Griffbefestigung ermöglicht dabei das Befestigen eines als metallischen Hohlgriffs ausgebildeten Stielgriffs, durch welchen die Handhabung des damit ausgestatteten Kochgefäßes aufgrund des geringeren Gewichts vereinfacht werden soll.

Weitere Griffbefestigungen sind bspw. aus der DE 34 07 503 C2, aus der DE 103 22 409 A1, aus der DE 94 14 234 U1 sowie aus der DE 44 11 550 C1 und der DE 10 2006 058041 A1 bekannt.

Allen aus dem Stand der Technik bekannten Griffbefestigungen ist dabei jedoch gemein, dass diese für den Fall eines metallischen Kochgefäßes und eines metallischen Griffs, bei der Benutzung des Kochgefäßes eine hohe Wärmeübertragung zwischen diesem und dem Griff aufweisen, was üblicherweise dazu führt, dass das Kochgefäß nach einer bestimmten Zeit nicht ohne zusätzliche Schutzmaßnahmen am Griff angefasst werden kann. Da jedoch metallische Kochgefäße nach wie vor hoch im Kurs des Verbrauchers stehen, werden bereits mannigfaltige Anstrengungen unternommen, bspw. durch nicht aus Metall ausgebildete Griffe, um letztere derart ausgestalten zu können, dass ein Anfassen des Griffs auch bei einer längeren Kochdauer noch gefahrlos möglich ist.

Die vorliegende Erfindung beschäftigt sich mit dem Problem, für eine Griffbefestigung der gattungsgemäßen Art, eine verbesserte oder zumindest eine andere Ausführungsform anzugeben, welche eine gefahrlose Handhabung auch bei stark erhitztem Kochgefäß problemlos ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf den allgemeinen Gedanken, einen Griff eines Kochgefäßes lediglich über einen punkt- und/oder linienförmigen Kontakt an dem Kochgefäß anzubinden und dadurch Wärmebrücken bzw. eine Wärmeübertragung zwischen dem Kochgefäß und dem eigentlichen Griff zu minimieren. Hierzu schlägt die Erfindung eine Griffbefestigung zum Befestigen eines Griffs an einem Kochgefäß oder dergleichen vor, welche ein, vorzugsweise nicht lösbar am Kochgefäß angebrachtes Halteelement umfasst. Zwischen diesem Halteelement und einer griffseitigen Halteeinrichtung, beispielsweise eines Haltestiftes mit einem Haltekopf, soll dabei erfindungsgemäß kein flächiger, sondern lediglich ein linien- bzw. punktförmiger Kontakt vorhanden sein. Das Halteelement weist erfindungsgemäß ein federndes Rastelement auf, welches bei am Kochgefäß angebrachtem Griff, einen griffseitigen Haltekopf der Halteeinrichtung, welche beispielsweise als Haltestift ausgebildet ist, hintergreift und dadurch den Griff am Kochgefäß fixiert. Darüber hinaus kann ein das Halteelement überfangendes Adapterelement vorgesehen sein, welches eine Durchgangsöffnung für den griffseitigen Haltekopf aufweist und welches bei am Kochgefäß angebrachtem Griff die eigentliche Griffbefestigung verdeckt. Bei der zuvor beschriebenen Ausführungsform, besteht dabei zwischen dem Halteelement einerseits und dem griffseitigen Haltekopf andererseits, das heißt zwischen dem Kochgefäß und dem Griff, ausschließlich ein punkt- und/oder linienförmiger Kontakt, so dass eine Wärmeübertragung zwischen dem Kochgefäß und dem Griff minimiert und damit ein sich Erwärmen des Griffs während des eigentlichen Kochvorganges stark reduziert werden kann. Mittels der erfindungsgemäßen Griffbefestigung ist somit ein Anbinden metallischer Griffe an ebenfalls metallische Kochgefäße möglich, ohne dass bei einer längeren Kochdauer befürchtet werden muss, dass sich der oder die Griffe derart stark erwärmen, dass diese nicht mehr gefahrlos angefasst werden können. Hierdurch eröffnet sich die Möglichkeit, auch die beim Verbraucher momentan hoch im Kurs stehenden metallischen Griffe einzusetzen, ohne dass für den Verbraucher zu irgendeiner Zeit während eines normalen Kochvorganges die Gefahr besteht, sich an dem metallischen Griff zu verbrennen.

Bei einer vorteilhaften Weiterbildung der erfindungsgemäßen Lösung, ist das Adapterelement aus Kunststoff, insbesondere aus Silikon, ausgebildet. Dies bietet einerseits die Möglichkeit, dass Adapterelement äußerst kostengünstig auszubilden und andererseits die Möglichkeit, das Adapterelement bei sich ändernder Griffbefestigung schnell und kostengünstig, dass heißt durch ein änderndes Spritzgusswerkzeug, zu adaptieren. Darüber hinaus lassen sich Kunststoffe bezüglich ihrer Eigenschaften heutzutage an nahezu sämtliche Anforderungen anpassen, so dass auch diesbezüglich ein aus Kunststoff ausgebildetes Adapterelement einen klaren Vorteil bietet.

Bei einer weiteren vorteilhaften Ausführungsform der erfindungsgemäßen Lösung, ist ein das Adapterelement überdeckendes Blendelement, insbesondere aus Metall, vorgesehen. Ein derartiges Blendelement, welches bspw. in der Art einer Hülse ausgebildet sein kann, verdeckt somit das aus Kunststoff ausgebildete Adapterelement und bietet dadurch ein optisch vom Kochgefäß zum Griff durchgehendes metallisches Design. Selbstverständlich kann dabei das Blendelement spezielle optische oder designerische Effekte aufweisen, welche den Übergang vom Kochgefäß zum Griff entweder unterstreichen und damit herausheben oder kaschieren.

Bei einer vorteilhaften Weiterbildung der erfindungsgemäßen Lösung, ist das Halteelement über zumindest einen, vorzugsweise über zwei, Schweißpunkte am Kochgefäß angeordnet. Auch hier wird wiederum ein lediglich punktförmiger Kontakt zwischen dem Halteelement einerseits und dem Kochgefäß andererseits gewählt, um die Wärmeübertragung vom Kochgefäß in das Halteelement und damit vom Kochgefäß in den Griff möglichst gering halten zu können. Derartige Punktschweißverbindungen stellen eine heutzutage weit verbreitete Befestigungsmethode dar und sind einerseits kostengünstig herzustellen und andererseits so stabil, dass sie eine zuverlässige Befestigung des Griffs am Kochgefäß während dessen gesamter Lebensdauer ermöglichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Explosionsdarstellung einer erfindungsgemäßen Griffbefestigung aus unterschiedlichen Ansichten,
- Fig. 2: eine Darstellung wie in Fig. 1, jedoch bei einer anderen Griffbefestigung und einem anderen Griff,
- Fig. 3: unterschiedliche Schnittdarstellungen einer Griffbefestigung nach Fig. 1,
- Fig. 4: unterschiedliche Schnittdarstellungen bei einer Griffbefestigung nach Fig. 2,
- Fig. 5: eine erste Ausführungsform eines erfindungsgemäßen Halteelements,
- Fig. 6: eine Darstellung wie in Fig. 5, jedoch bei einer anderen Ausführungsform,
- Fig. 7: eine mögliche Ausführungsform einer Halteeinrichtung.

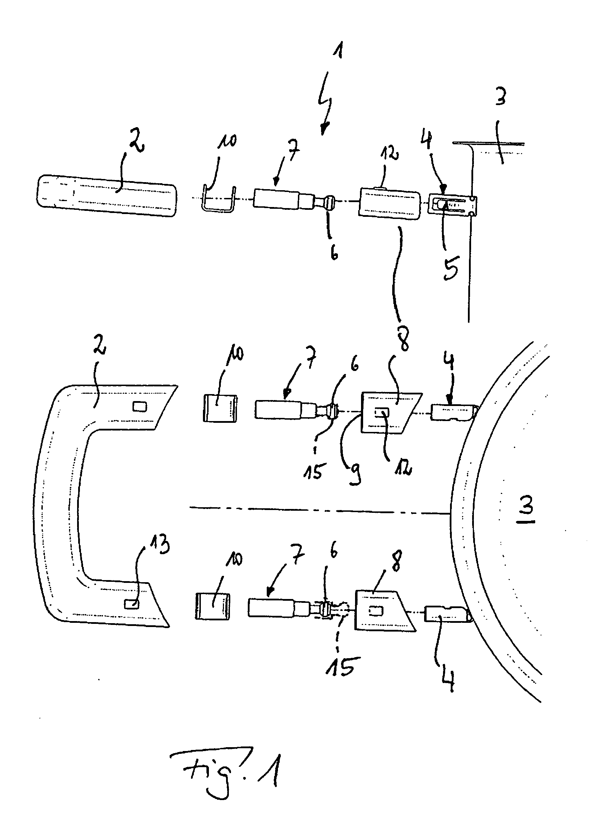

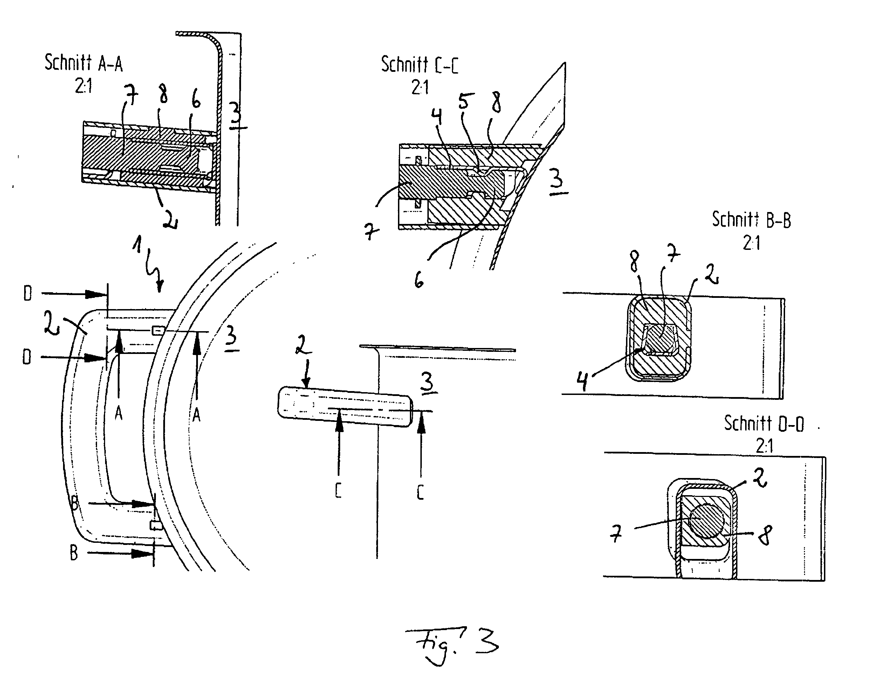

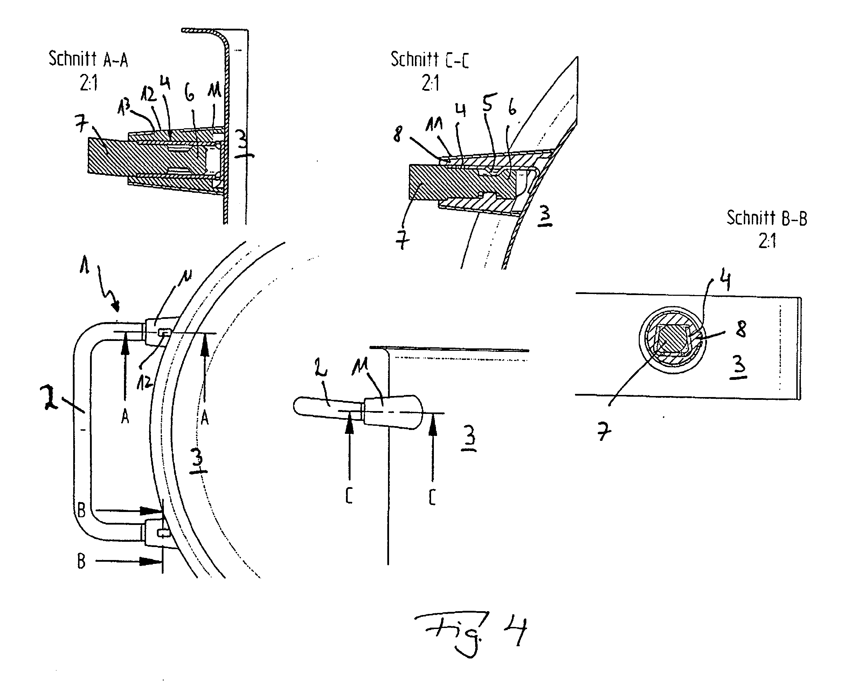

Entsprechend der Fig. 1, weist eine erfindungsgemäße Griffbefestigungseinrichtung 1 zum Befestigen eines Griffs 2 an einem Kochgefäß 3, ein vorzugsweise nicht lösbar am Kochgefäß 3 angebrachtes, insbesondere angeschweißtes, Halteelement 4 auf. Am Halteelement 4 ist dabei ein federndes Rastelement 5 vorgesehen, welches bei am Kochgefäß 3 vollständig angebrachtem Griff 2, einen griffseitigen Haltekopf 6 einer Halteeinrichtung 7, welche beispielsweise als Haltestift ausgebildet ist, hintergreift (vgl. auch die Schnittdarstellungen in den Fig. 3 und 4). Darüber hinaus ist ein, das Halteelement 4 überfangendes, dass heißt aufnehmendes Adapterelement 8 vorgesehen, welches eine Durchgangsöffnung 9 für den griffseitigen Haltekopf 6 aufweist.

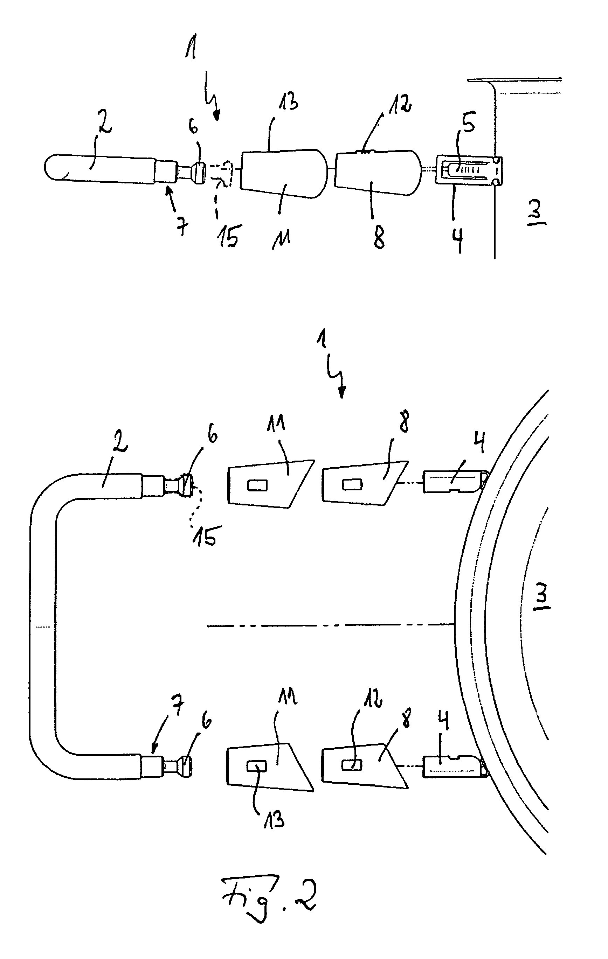

Der Haltekopf 6 bzw. die Halteeinrichtung 7 kann dabei entweder einteilig mit dem Griff 2 (vgl. Fig. 2) oder separat zu diesem ausgebildet sein und über ein Klemmelement 10, insbesondere eine Klammer, im Griff 2 fixiert sein (vgl. Fig. 1). Denkbar ist auch eine Schweißverbindung zwischen der Halteeinrichtung 7, dem Klemmelement 10 und dem Griff 2. Erfindungswesentlich ist dabei, dass zwischen dem Halteelement 4 einerseits und der griffseitigen Halteeinrichtung 7, insbesondere dem Haltekopf 6 andererseits ein ausschließlich punkt- und/oder linienförmiger Kontakt vorgesehen ist, wodurch eine Wärmeübertragung von dem Kochgefäß 3 in den Griff 2 minimiert werden kann. Hierdurch ist es insbesondere auch möglich, den Griff 2 aus Metall auszubilden, ohne dass hierbei befürchtet werden muss, dass sich dieser bei einem länger andauernden Kochprozess, so stark erwärmt, dass er nicht mehr gefahrlos angefasst werden kann. Der Griff 2 ist somit wärmetechnisch vom Kochgefäß 3 entkoppelt.

Die Griffbefestigung 1 kann dabei ein, das Adapterelement 8 überdeckendes Blendelement 11 aufweisen, welches ebenfalls vorzugsweise aus Metall ausgebildet sein kann. Ein derartiges Blendelement 11, ist bspw. in der Fig. 2 dargestellt. Eine Befestigung zwischen dem Adapterelement 8 einerseits und dem Blendelement 11 andererseits kann bspw. über eine am Adapterelement 8 angeordnete Rastnase 12 bewirkt werden, welche bei an das Kochgefäß 3 angebautem Griff 2 mit einer komplementär dazu ausgebildeten Rastöffnung 13 am Griff 2 oder am Blendelement 11 zusammenwirkt. Bei der Griffbefestigung 1 gemäß der Fig. 1, wird die Aufgabe des Blendelements 11 vom Griff 2 selbst übernommen, welcher als Hohlprofil ausgebildet ist und zumindest soweit über das Adapterelement 8 überschiebbar ist, dass die adapterelementseitige Rastnase 12 in der griffseitigen Rastöffnung 13 verrastet. Durch die Tatsache, dass der Griff 2 gemäß der Fig. 2 nicht hohl ausgebildet ist, ist dieser nicht in der Lage, das Adapterelement 8 zu überfangen, so dass hier ein Blendelement 11 vorgesehen ist. Dieses Blendelement 11 kann prinzipiell derart ausgebildet sein, dass es einen Übergang zwischen dem Kochgefäß 3 und dem Griff 2 unterstreicht, dass heißt hervorhebt, oder kaschiert.

Das Halteelement 4 ist über zumindest einen, vorzugsweise zwei Schweißpunkte am Kochgefäß 3 angebunden, wodurch auch zwischen dem Halteelement 4 einerseits und dem Kochgefäß 3 andererseits ein lediglich punktförmiger Kontakt besteht. Zum Befestigen des Griffs 2 am Kochgefäß 3, wird zunächst das Adapterelement 8 über das Halteelement 4 geschoben und anschließend der Griff 2 mit seinen Halteeinrichtungen/-stiften 7 durch die Durchgangsöffnung 9 des Adapterelements 8 und zwar soweit, bis es mit dem Rastelement 5 des Halteelements 4 verrastet. Je nach Ausführungsform des Griffs 2 kann dabei zusätzlich ein Blendelement 11 vorgesehen sein. Die Verrastung des Rastelements 5 mit dem Haltekopf 6 der Halteeinrichtung 7 ist dabei insbesondere in den Schnittdarstellungen C-C der Fig. 3 und 4 deutlich zu sehen.

Um den Griff 2 möglichst stabil am Kochgefäß 3 anzubinden, ist vorgesehen, dass sich das Adapterelement 8 und/oder das Blendelement 11 bzw. bei der anderen Ausführungsform der Griff 2 selbst am Kochgefäß 3 abstützen und formschlüssig anliegen.

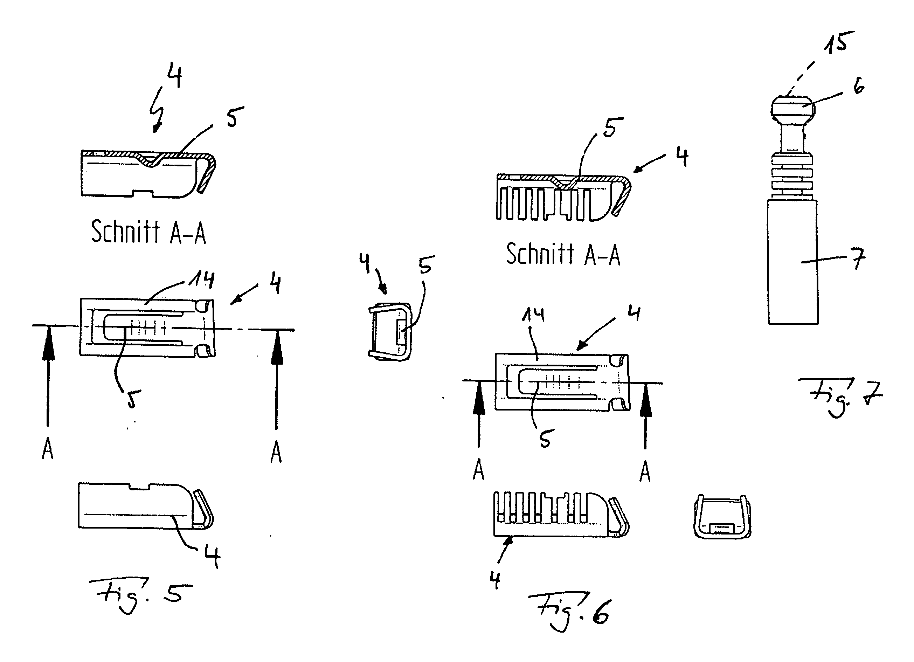

Betrachtet man insbesondere die Fig. 5 und 6, so kann man erkennen, dass das Halteelement 4 einen U-förmigen Querschnitt aufweist, wobei das den Haltekopf 6 des Haltestifts 7 hintergreifende Rastelement 5 an einem der beiden U-Schenkel verbindenden Steg 14 angeordnet ist. Das Halteelement 4 kann jedoch auch eine beliebige andere hohlraumförmige Gestalt aufweisen. Generell kann das Halteelement 4 als kostengünstiges Blechformteil ausgebildet sein, welches durch einfache und kostengünstige Stanz- bzw. Formvorgänge herstellbar ist. Demgegenüber ist das Adapterelement 8 vorzugsweise aus Kunststoff, insbesondere aus Silikon, ausgebildet und dadurch ebenfalls kostengünstig und in nahezu beliebiger Form und mit nahezu beliebigen Eigenschaften herstellbar.

Um eine Wärmeübertragung zwischen dem Kochgefäß 3 und dem Griff 2 weiter minimieren zu können, kann vorgesehen sein, dass das Halteelement 4 kammartig ausgebildete U-Schenkel aufweist, wie dies bspw. in der Fig. 6 dargestellt ist. Durch diese unterbrochenen U-Schenkel, kann eine Kontaktfläche zwischen dem Halteelement 4 und der Halteeinrichtung 7 weiter reduziert werden, was zu einer wiederum verminderten Wärmeübertragungsrate führt. In ähnlicher Weise kann auch der Haltestift 7 ausgeführt sein (vgl. Fig. 7) und einen in Axialrichtung unterbrochenen Außenumfang aufweisen. Ziel der erfindungsgemäßen Griffbefestigungseinrichtung 1 ist es dabei, die Kontaktflächen zwischen dem Griff 2 und dem Kochgefäß 3 soweit zu reduzieren, dass sich der Griff 2 auch bei länger andauernden Kochvorgängen nicht so stark erwärmt, dass ein gefahrloses Anfassen nicht mehr möglich ist.

Um eine Wärmeübertragung zwischen dem Halteelement 4 und der griffseitigen Halteeinrichtung 7 weiter reduzieren zu können, kann hier optional ein lsolierelement 15 oder eine die Halteeinrichtung 7 gegenüber dem Halteelement 4 isolierende Beschichtung vorgesehen sein. Das Isolierelement 15 bzw. die wärmeisolierende Beschichtung sind dabei gemäß der Fig. 1 mit unterbrochen gezeichneter Linie dargestellt.

Generell kann die erfindungsgemäße Griffbefestigungseinrichtung 1 auch Teil eines nicht näher ausgeführten Baukastensystems sein, welches unterschiedliche Adapterelemente 8, unterschiedliche Halteelemente 4, unterschiedliche Halteeinrichtungen 7, etc. umfasst und dadurch an unterschiedliche Griffe 2 bzw. unterschiedliche Kochgefäße 3 leicht adaptierbar ist. Generell ist es mit der erfindungsgemäßen Griffbefestigungseinrichtung 1 möglich, die momentan beim Verbraucher besonders hoch im Kurs stehenden metallischen Griffelemente so weiterzubilden, dass diese im Vergleich zu bekannten metallischen Griffelementen eine deutlich verringerte Erwärmung während der Benutzung des Kochgefäßes 3 erfahren.

## Patentansprüche

1. Griffbefestigungseinrichtung (1) zum Befestigen eines Griffs (2) an einem Kochgefäß (3) oder dergleichen, wie beispielsweise einem Kochtopf oder einer Bratpfanne, mit einem am Kochgefäß (3), vorzugsweise nicht lösbar, angebrachten Halteelement (4),
**dadurch gekennzeichnet,**
- **dass** zwischen dem Halteelement (4) einerseits und einer griffseitigen Halteeinrichtung (7) andererseits ein ausschließlich punkt- und/oder linienförmiger Kontakt vorgesehen ist,
- **dass** das Halteelement (4) ein federndes Rastelement (5) aufweist, welches bei am Kochgefäß (3) angebrachtem Griff (2), einen Haltekopf (6) der griffseitigen Halteeinrichtung (7) hintergreift,
- **dass** das Halteelement (4) hohlraumförmig ausgebildet ist, vorzugsweise einen U-förmigen Querschnitt aufweist, wobei das Rastelement (5) an einem die beiden U-Schenkel verbindenden Steg (14) angeordnet ist.

2. Griffbefestigungseinrichtung nach Anspruch 1,
**dadurch gekennzeichnet,**
**dass** ein das Halteelement (4) überfangendes Adapterelement (8) vorgesehen ist, welches eine Durchgangsöffnung (9) für den Haltekopf (6) aufweist,

3. Griffbefestigungseinrichtung nach Anspruch 2,
**dadurch gekennzeichnet,**
**dass** das Adapterelement (8) aus Kunststoff, insbesondere aus Silikon, ausgebildet ist.

4. Griffbefestigungseinrichtung nach einem der Ansprüche 2 oder 3,
**dadurch gekennzeichnet,**
**dass** ein das Adapterelement (8) überdeckendes Blendelement (11), insbesondere aus Metall, vorgesehen ist.

5. Griffbefestigungseinrichtung nach einem der Ansprüche 1 bis 4,
**dadurch gekennzeichnet,**
**dass** der Haltekopf (6) einteilig mit dem Griff (2) ausgebildet ist.

6. Griffbefestigungseinrichtung nach einem der Ansprüche 1 bis 5,
**dadurch gekennzeichnet,**
**dass** der Haltekopf (6) separat zum Griff (2) ausgebildet ist und über ein Klemmelement (10), insbesondere eine Klammer, im Griff (2) fixiert ist.

7. Griffbefestigungseinrichtung nach einem der Ansprüche 4 bis 6,
**dadurch gekennzeichnet,**
**dass** das Adapterelement (8) eine Rastnase (12) aufweist, welche bei an das Kochgefäß (3) angebautem Griff (2) mit einer komplementär dazu ausgebildeten Rastöffnung (13) am Griff (2) oder am Blendelement (11) zusammenwirkt.

8. Griffbefestigungseinrichtung nach einem der Ansprüche 1 bis 7,
**dadurch gekennzeichnet,**
**dass** das Halteelement (4) über zumindest einen, vorzugsweise über zwei, Schweißpunkte am Kochgefäß (3) angebunden ist.

9. Griffbefestigungseinrichtung nach einem der Ansprüche 1 bis 8,
**dadurch gekennzeichnet,**
**dass** das Halteelement (4) kammartig ausgebildete U-Schenkel aufweist.

10. Griffbefestigungseinrichtung nach einem der Ansprüche 4 bis 9,
**dadurch gekennzeichnet,**
**dass** sich das Adapterelement (8) und/oder das Blendelement (11) am Kochgefäß (3) abstützen.

11. Griffbefestigungseinrichtung nach einem der Ansprüche 1 bis 10,
**dadurch gekennzeichnet,**
**dass** zwischen dem Halteelement (4) und der griffseitigen Halteeinrichtung (7) ein Isolierelement (15) oder eine die Halteeinrichtung (7) gegenüber dem Halteelement (4) isolierende Beschichtung vorgesehen ist.

12. Kochgefäß, insbesondere ein Kochtopf oder eine Pfanne, mit einer Griffbefestigungseinrichtung (1) nach einem der Ansprüche 1 bis 11.

## Claims

1. A handle fastening device (1) for fastening a handle (2) to a cooking vessel (3) or the like, such as a cooking pot or a frying pan, for example, comprising a holding element (4), which is attached to the cooking vessel (3), preferably so as not to be capable of being detached,
**characterized in**
- **that** provision is made between the holding element (4) on the one side and a holding device (7) on the handle side on the other side for a contact, which is exclusively point and/or line-shaped,
- **that** the holding element (4) encompasses a resilient fixing element (5), which engages behind a holding head (6) of the holding device (7) when the handle (2) is attached to the cooking vessel (3),
- **that** the holding element (4) is embodied in a cavity-shaped manner, preferably encompasses a U-shaped cross section, wherein the fixing element (5) is arranged on a bar (14), which connects the two U-journals.

2. The handle fastening device according to claim 1,
**characterized in**
**that** provision is made for an adapter element (8), which covers the holding element (4) and which encompasses a through-hole (9) for the holding head (6).

3. The handle fastening device according to claim 2,
**characterized in**
**that** the adapter element (8) is embodied of plastic, in particular of silicon.

4. The handle fastening device according to one of claims 2 or 3,
**characterized in**
**that** provision is made for a screen element (11), in particular of metal, which covers the adapter element (8).

5. The handle fastening device according to one of claims 1 to 4,
**characterized in**
**that** the holding head (6) is embodied in one piece with the handle (2).

6. The handle fastening device according to one of claims 1 to 5,
**characterized in**
**that** the holding head (6) is embodied separately to the handle (2) and is fixed in the handle (2) via a clamping element (10), in particular a clip.

7. The handle fastening device according to one of claims 4 to 6,
**characterized in**
**that** the adapter element (8) encompasses a locking pin (12), which, when the handle (2) is attached to the cooking vessel (3), interacts with a locking element (13) on the handle (2) or on the screen element (11), which is embodied complementary thereto.

8. The handle fastening device according to one of claims 1 to 7,
**characterized in**
**that** the holding element (4) is connected to the cooking vessel (3) via at least one, preferably via two welding spots.

9. The handle fastening device according to one of claims 1 to 8,
**characterized in**
**that** the holding element (4) encompasses U-journals, which are embodied in a comb-like manner.

10. The handle fastening device according to one of claims 4 to 9,
**characterized in**
**that** the adapter element (8) and/or the screen element (11) are supported on the cooking vessel (3).

11. The handle fastening device according to one of claims 1 to 10,
**characterized in**
**that** provision is made between the holding element (4) and the holding device (7) on the handle side for an insulating element (15) or an insulating coating, which insulates the holding device (7) from the holding element (4).

12. A cooking vessel, in particular a cooking pot or a pan, comprising a handle fastening device (1) according to one of claims 1 to 11.

## Revendications

1. Dispositif de fixation de poignée (1) pour fixer une poignée (2) sur un récipient de cuisson (3) ou similaires, tel que par exemple une marmite ou une poêle à frire, avec un élément de maintien (4) fixé sur un récipient de cuisson (3), de préférence de façon non amovible,
**caractérisé**
- **en ce qu'**entre l'élément de maintien (4) d'une part et un dispositif de maintien (7) côté poignée d'autre part, il est prévu un contact de forme exclusivement ponctuelle et/ou linéaire,
- **en ce que** l'élément de maintien (4) comporte un élément d'enclenchement (5) élastique, qui lorsque la poignée (2) est montée sur le récipient de cuisson (3) s'accroche par l'arrière sur une tête de maintien (6) du dispositif de maintien (7) côté poignée,
- **en ce que** l'élément de maintien (4) est conçu en forme de cavité, en ce qu'il comporte de préférence une section transversale en forme de U, l'élément d'enclenchement (5) étant disposé sur une barrette (14) reliant les deux branches du U.

2. Dispositif de fixation de poignée selon la revendication 1, **caractérisé en ce qu'**il est prévu un élément adaptateur (8) chevauchant l'élément de maintien (4) qui comporte un orifice de passage (9) pour la tête de maintien (6).

3. Dispositif de fixation de poignée selon la revendication 2, **caractérisé en ce que** l'élément adaptateur (8) est conçu en matière plastique, notamment en silicone.

4. Dispositif de fixation de poignée selon l'une quelconque des revendications 2 ou 3, **caractérisé en ce qu'**il est prévu un élément cache (11) recouvrant l'élément adaptateur (8).

5. Dispositif de fixation de poignée selon l'une quelconque des revendications 1 à 4, **caractérisé en ce que** la tête de maintien (6) est conçue en monobloc avec la poignée (2).

6. Dispositif de fixation de poignée selon l'une quelconque des revendications 1 à 5, **caractérisé en ce que** la tête de maintien (6) est conçue séparément de la poignée (2) et fixée par l'intermédiaire d'un élément de serrage (10), notamment d'un crampon dans la poignée (2).

7. Dispositif de fixation de poignée selon l'une quelconque des revendications 4 à 6, **caractérisé en ce que** l'élément adaptateur (8) comporte un tenon d'enclenchement (12) qui lorsque la poignée (2) est montée sur le récipient de cuisson (3) coopère avec un orifice d'enclenchement (13) conçu de façon complémentaire à celui-ci sur la poignée (2) ou sur l'élément cache (11).

8. Dispositif de fixation de poignée selon l'une quelconque des revendications 1 à 7, **caractérisé en ce que** l'élément de maintien (4) est relié au récipient de cuisson (3) par l'intermédiaire d'au moins un, de préférence par l'intermédiaire de deux points de soudure.

9. Dispositif de fixation de poignée selon l'une quelconque des revendications 1 à 8, **caractérisé en ce que** l'élément de maintien (4) comporte des branches en U conçues en peigne.

10. Dispositif de fixation de poignée selon l'une quelconque des revendications 4 à 9, **caractérisé en ce que** l'élément adaptateur (8) et/ou l'élément cache (11) s'appuient sur le récipient de cuisson (3).

11. Dispositif de fixation de poignée selon l'une quelconque des revendications 1 à 10, **caractérisé en ce qu'**entre l'élément de maintien (4) et le dispositif de maintien (7) côté poignée est prévu un élément isolant (15) ou un revêtement isolant le dispositif de maintien (7) par rapport à l'élément de maintien (4).

12. Récipient de cuisson, notamment une marmite ou une poêle, avec un dispositif de fixation de poignée (1) selon l'une quelconque des revendications 1 à 11.
